# EUROPEAN PATENT SPECIFICATION

(11) **EP 3 630 436 B1**
(45) Date of publication and mention of the grant of the patent: **16.08.2023**
(21) Application number: 18722609.7
(22) Date of filing: 15.05.2018
(51) Int. Cl.: B29B 7/42, B29B 7/46, B29B 7/72, B29B 7/74, B29B 7/82, B29B 7/84, B29B 7/94, B29B 13/06, B29B 15/04, B29C 48/285, B29C 48/375, B29C 48/385, B29C 48/80, B29C 48/875

(54) **CONTINUOUS LIQUID MIXING FOR PRODUCING COMPOSITES DESTINED FOR USE IN ELASTOMERIC PRODUCTS**
KONTINUIERLICHES FLÜSSIGMISCHVERFAHREN ZUR HERSTELLUNG VON VERBUNDSTOFFEN ZUR VERWENDUNG BEI ELASTOMEREN PRODUKTEN
MÉLANGE DE LIQUIDE CONTINU POUR PRODUIRE DES COMPOSITES DESTINÉS À ÊTRE UTILISÉS DANS DES PRODUITS ÉLASTOMÈRES

(30) Priority: 30.05.2017 FR 1754737
(43) Date of publication of application: 08.04.2020
(73) Proprietor: COMPAGNIE GENERALE DES ETABLISSEMENTS MICHELIN, 63000 Clermont-Ferrand (FR)
(72) Inventor: PIALOT, Frédéric, 63040 CLERMONT-FERRAND Cedex 9 (FR); HOMBERT, Christophe, 63040 CLERMONT-FERRAND Cedex 9 (FR)
(74) Representative: Roussy, Delphine
(86) International application number: PCT/EP2018/062472
(87) International publication number: WO 2018/219630

(56) References cited:
- EP-A1- 1 739 117
- EP-A1- 2 832 752
- EP-A2- 0 426 019
- EP-A2- 1 110 691
- WO-A1-03/024683
- WO-A1-03/031131
- WO-A1-2011/117280
- FR-A1- 2 796 568
- US-A- 2 371 722
- US-A- 6 040 364
- US-A1- 2013 032 045

## Description

### TECHNICAL FIELD

The invention relates to the employment of continuous liquid mixing in the production of composites destined for use in finished and semi-finished elastomeric products.

### BACKGROUND

A masterbatch is an elastomeric composite in which a charge has been introduced along with other optional additives (the terms "elastomer masterbatch composition", "masterbatch composition" and "masterbatch" are interchangeable). Masterbatches are often destined for the production of rubber compositions, for example, in the manufacture of tires or semi-finished products for tires (including but not limited to profiled products such as treads).

It is known to obtain a masterbatch by continuous liquid mixing. In such a case, in the realization of elastomeric composites, the passage of a liquid mixture (e.g., a mixture of an emulsion of elastomer and a slurry of charge) to a viscoelastic solid is effected by coagulation. Coagulation results from a reaction to a kinetic and variable yield that is dependent upon the incoming ingredients. Coagulum is formed in many emulsion polymerizations, and the type and amount of coagulum formed depends upon the polymer system and the polymerization recipe and technique. For example, a concentrated slurry will decrease the setting time, and it will also limit the volume of water to be extracted and processed. Various methods exist for producing elastomeric composites, examples of which are disclosed by US Patent Nos. 6,048,923 and 6,075,084, PCT Publication WO03/031131, European publication EP0426019, US Publication US2013/032045 and also by Japanese Patent No. JP5139610.

Usually the masterbatch is then introduced into a kneading tool in order to introduce the vulcanization additives, thereby producing the final composition that is ready for incorporation into a rubber product such as a tire. Being that multiple types of masterbatch compositions are contemplated during tire production, the invention advantageously adapts a continuous liquid mixing process to a discontinuous system.

### SUMMARY

The invention provides a continuous liquid mixing process for producing a composite as a function of a selected rubber mixture recipe according to claim 1. The process includes the step of forming a coagulum within pre-defined coagulum production sections of a coagulation preparation installation. The coagulum is dewatered and converted into a pelletized material. The pelletized material is conveyed to a mixing installation and metered into a complementary mixer. The pelletized material is controllable advanced within pre-defined zones in the complementary mixer such that, for each zone, a residence time of the pelletized material is controlled and a target temperature of the pelletized material is realized prior to downstream conveyance thereof. The composite is discharged from the complementary mixer as a semi-finished rubber material.

The pre-defined zones in the mixer include a feeding zone into which the pelletized material is fed to an extruder that converts the pelletized material into an extrudate. In some embodiments, the extruder is a twin-screw extruder. A drying zone is positioned downstream of the feeding zone and terminates in a vapor extractor that evacuates residual water that is extracted from the extrudate in the drying zone. A mixing zone is positioned downstream of the drying zone and is defined along a portion of the mixer between the vapor extruder and an extruder egress from which the mixer discharges the semi-finished rubber material.

In some embodiments, the process also includes the step of introducing one or more additives into the mixing zone at an additive dosage position thereof where the extrudate reaches a pre-defined target temperature for introducing the additives. One or more vulcanizing agents are subsequently added into the mixing zone at a vulcanizing dosage position thereof where the extrudate reaches a pre-defined target temperature for introducing the vulcanizing agents. For some of these embodiments, an additive doser disposed at the additive dosage position realizes introduction of the one or more additives into the mixing zone, and a vulcanizing agent doser disposed at the vulcanizing dosage position realizes introduction of the one or more vulcanizing agents into the mixing zone.

The extruder controls downstream conveyance of the extrudate such that the extrudate realizes a minimum residence time at each of the additive dosage position and the vulcanizing dosage position in the mixing zone.

The coagulum production sections of the coagulation preparation installation include a coagulum mixer in fluid communication with each of an emulsion reservoir that stores an elastomer emulsion and a slurry reservoir that stores a slurry in which particles of charge are dispersed in water. A homogenizing section is disposed in fluid communication with the coagulum mixer and downstream thereof. The homogenizing section includes a helical homogenizing agitator of predetermined length rotatably disposed within a generally annular homogenizing chamber. A kneading section is disposed in fluid communication with the homogenizer and downstream thereof. The kneading section includes a generally helical kneading agitator of predetermined length rotatably disposed within a generally annular kneading chamber. A texturing section is disposed in fluid communication with the kneading section and downstream thereof. The texturing section includes a generally helical texturing agitator of pre-determined length rotatably disposed within a texturing chamber and having an egress extent from which the coagulum preparation installation discharges the coagulum.

The coagulum mixer is selected from one of a coagulum mixer that includes a mixing zone in which a flow of the elastomer emulsion and a flow of the slurry are brought in contact, with one of the flows leading into the other flow and both flows being brought to low pressure before their contact with one another, and a jet mixer in which the slurry is pressurized and then expelled by injection.

For some embodiments, the process also includes the step of dewatering the coagulum and converting the dewatered coagulum into a pelletized material at a dewatering installation. For some of these embodiments, the dewatering installation includes a dewatering device that discharges a dewatered coagulum therefrom and a granulation apparatus, such as a pelletizer, that converts the dewatered coagulum into the pelletized material.

The mixing installation includes a motorized conveyor having at least one mass sensor for performing a weighing process during which the motorized conveyor delivers discharged pelletized material in real time into the complementary mixer. The motorized conveyor realizes a transport sequence during which a speed of the motorized conveyor is adjusted as a function of a weight of the discharged pelletized material.

In some embodiments, the step of discharging the composite from the complementary mixer includes providing a pair of rollers adjacent the extruder egress that form the extrudate into a band of rubber material.

In some embodiments, the process includes the step of conveying the composite to a cooling installation.

In some embodiments, the process includes the step of conveying the composite band to a stacking installation that realizes stacking of the composite in at least one palette.

A system is also provided for producing a composite according to the disclosed continuous liquid mixing processes.

Other aspects of the disclosed invention will become readily apparent from the following detailed description.

### BRIEF DESCRIPTION OF DRAWINGS

The nature and various advantages of the presently disclosed invention will become more apparent upon consideration of the following detailed description, taken in conjunction with the accompanying drawings, in which like reference characters refer to like parts throughout, and in which:
FIG. 1 shows a schematic view of a system that realizes continuous liquid mixing during a masterbatch production cycle.
FIG. 2 shows a schematic view of an exemplary coagulum preparation installation of the system of FIG. 1.
FIG. 3 shows a cross-sectional view of an exemplary mixer used in the coagulum preparation installation of FIG. 2.
FIG. 4 shows a schematic view of an exemplary mixing installation of the system of FIG. 1 and exemplary conditions in which the mixing installation operates during a masterbatch production cycle.

### DETAILED DESCRIPTION

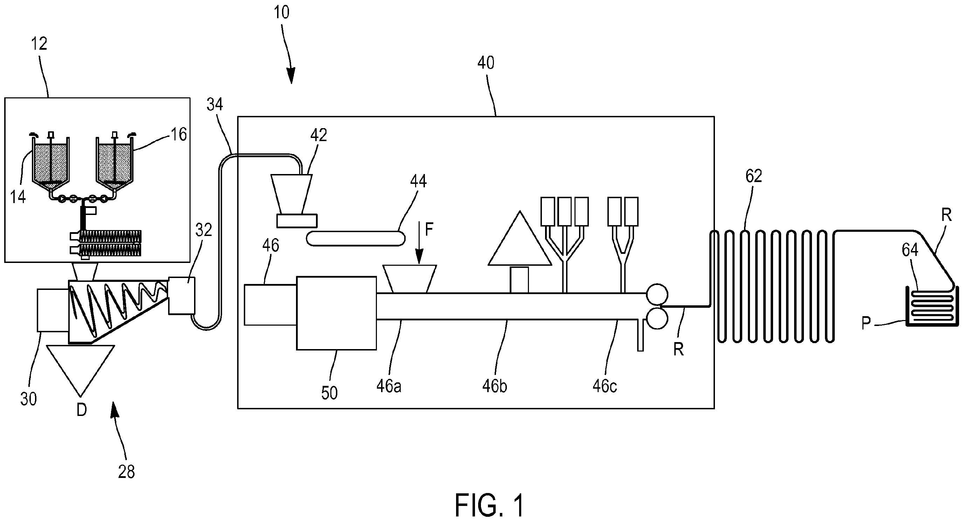

Now referring further to the figures, in which like numbers identify like elements, FIG. 1 shows an exemplary coagulum preparation system 10 that realizes a continuous mixing process for producing a composite as a function of a selected rubber mixture recipe. System 10 includes equipment that delineates a sequence of production of a composite in a full liquid phase. In a given production cycle, a composite is obtained according to a recipe that is selected from among a plurality of elastomeric mixture recipes.

As used herein, the term "composite" shall refer to the rubber mixture realized by the disclosed invention throughout a production cycle. A "composite" shall refer herein to an intermediate coagulum, a pelletized material (which may be a humid crumb or a dry crumb and may be referred to as "pellets" or "dosed pellets"), an extrudate, a sheet or band of rubber and any equivalent finished or semi-finished product derived from the system 10. A "composite" shall refer to an elastomeric composition, a masterbatch composition or simply a "composition".

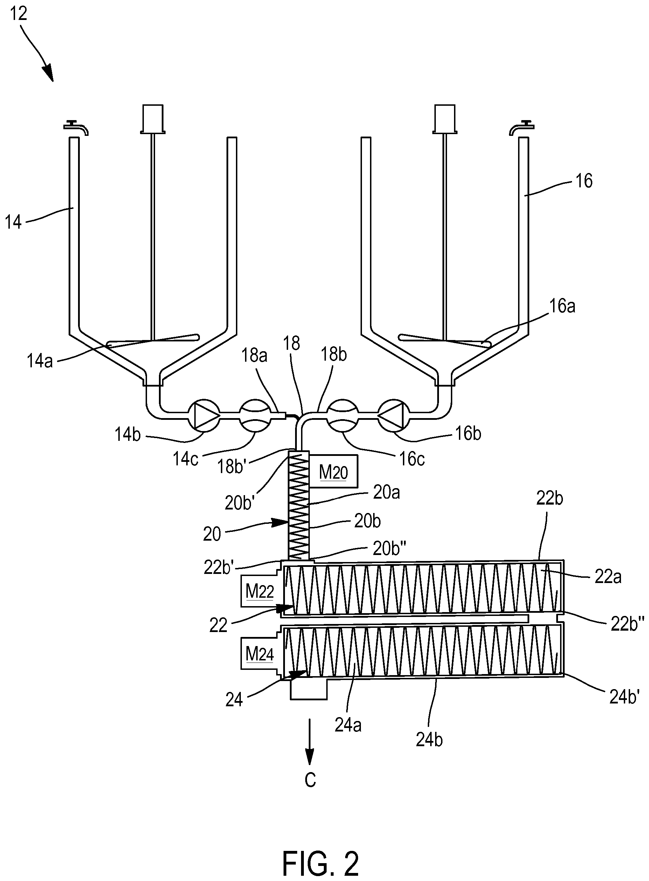

Still referring to FIG. 1 and additionally referring to FIG. 2, among the equipment provided with system 10 is a coagulum preparation installation 12 having predefined production sections that form a masterbatch composition as a coagulum. The coagulum preparation installation 12 includes an emulsion reservoir 14 equipped with an agitator 14a. The emulsion reservoir 14 stores an elastomer emulsion. The elastomer is selected from natural rubber, various synthetic elastomers (e.g., SBR, BR, etc.) and various elastomer blends.

The coagulum preparation installation 12 also includes a slurry reservoir 16 equipped with an agitator 16a. Slurry reservoir 16a stores a slurry in which particles of charge are dispersed in water. The charge is selected from one or more known materials, including but not limited to carbon black, silica, kaolin, chalk, synthesized organic charges, natural organic charges (e.g., wood fibers, cellulose fibers, etc.) and equivalents and combinations thereof.

For rapid and concentrated coagulation, some embodiments employ dispersed (structured or spherical) aqueous silica with silica concentrations greater than > 5%. For some of these embodiments, the silica concentration is at or about 20%.

Each agitator 14a, 16a maintains a respective low turbulence level that sufficiently ensures particle dispersion in each of the emulsion and the slurry, although it is understood that equivalent agitation means may be substituted therefor. In order to avoid decantation, it is possible to incorporate a Microfluidizer^{®} that fragments any charge aggregates that remain in the dispersion. The Microfluidizer^{®} may be disposed upstream or downstream of slurry reservoir 16 (for example, between the slurry reservoir and a peristaltic pump 16b as described and shown herein).

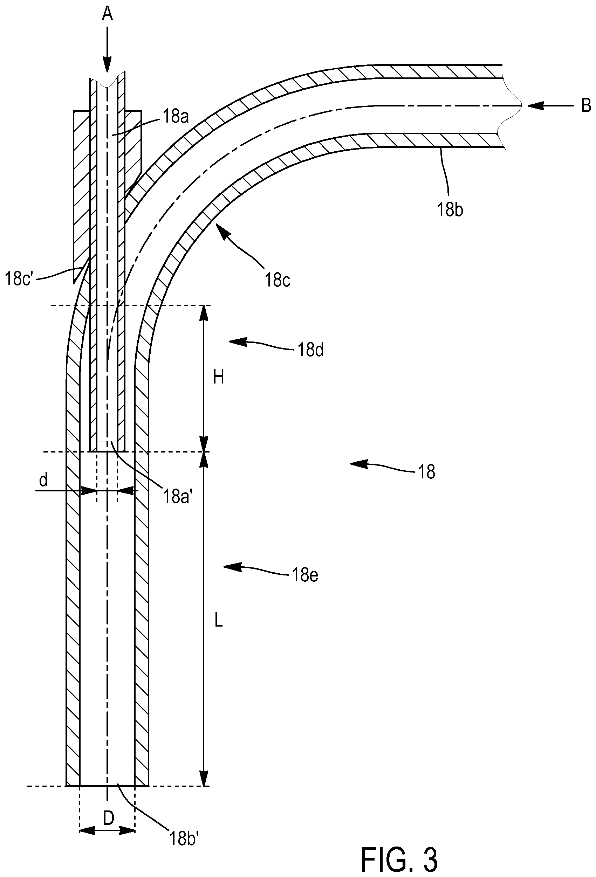

Referring further to FIG. 2 and also to FIG. 3, coagulum preparation installation 12 also includes a coagulum mixer 18 in fluid communication with each of the emulsion reservoir 14 and the slurry reservoir 16. An emulsion conduit 18a with a predetermined diameter d, together with a peristaltic pump (or series of pumps) 14b disposed intermediate the emulsion conduit and emulsion reservoir 14, conveys a precise volume of emulsion from the emulsion reservoir 14 to the mixer 18. In a similar manner, a slurry conduit 18b with a predetermined diameter D, together with a peristaltic pump (or series of pumps) 16b disposed intermediate the slurry conduit and the slurry reservoir 16, conveys a precise volume of slurry from the slurry reservoir 16 to the mixer 18. It is understood that peristaltic pump 16b may be substituted by one or more equivalent devices, including but not limited to one or more positive displacement pumps (e.g., eccentric rotor pumps, diaphragm pumps, piston pumps, etc.).

A respective mass flow meter 14c, 16c may be operatively disposed relative to the emulsion conduit 18a and the slurry conduit 18b so as directly measure the mass and density of the conveyed emulsion and slurry. Each mass flow meter 14c, 16c may be a Coriolis flow meter positioned downstream of a corresponding peristaltic pump, although it is understood that an equivalent apparatus may be substituted therefor.

As shown further in FIG. 3, mixer 18 receives the emulsion and slurry and effects a continuous process of preparing and discharging a composite as a fine dispersion of elastomeric charge (or "dispersion") therefrom. As used herein, a "continuous" process identifies a process or any portion of a process in which all of the steps can be executed without interruption. Continuous processes eliminate the need for intermediary steps and thereby sustain diverse industrial applications (for example, the production of various rubber mixtures destined for the production of tires). An example of the mixer 18 as described and shown herein is disclosed by Applicant's published application WO2017/021219.

The mixer 18 includes a supply section 18c, a parallel effluent section 18d disposed downstream thereof and a mixing section 18e disposed further downstream of both the supply section and the effluent section. During a coagulation preparation cycle, the emulsion and the slurry are simultaneously fed to the mixing section 18e. The feed rate for each of the emulsion and the slurry can be precisely metered so as to preserve a continuous flow process.

Referring further to FIG. 3, the supply section 18c of mixer 18 receives the incoming flows from the emulsion conduit 18a and the slurry conduit 18b. Along a convergence portion 18c' of the supply section, the emulsion conduit 18a conveys the emulsion from the emulsion reservoir 14 toward the mixer 18 (see arrow A). In this convergence portion, the emulsion conduit 18a penetrates the delivery path of the slurry conduit 18b leading from the slurry reservoir 16 toward the mixer 18 (see arrow B). The emulsion conduit 18a and the slurry conduit18b remain coaxial until effluent section 18d, having a predetermined length H, terminates at a discharge extent 18a' of the emulsion conduit 18a.

The incoming flows from the emulsion conduit 18a and the slurry conduit 18b maintain low pressure upon mutual contact in the mixing section 18e. The discharge extent 18a' of the emulsion conduit and a discharge extent 18b' of the slurry conduit delineate together the boundaries of the mixing section 18c having a predetermined length L. The discharge extent 18b' of the slurry conduit 18b also provides an egress for unimpeded discharge of the composite by the mixer 18

It is understood that the emulsion and slurry conduits 18a, 18b establish a relationship among the supply section 18c, the effluent section 18d and the mixing section 18e that preserves stable and efficient coagulation. The length and the diameter of each conduit are adjustable as a function of the selected recipe so long as the established relationship is respected among the sections of the mixer 18. For example, the described embodiment shows the slurry conduit 18b having a greater interior diameter D than the interior diameter d of the emulsion conduit 18a. A person of ordinary skill would understand that the inverse configuration could also be employed (i.e., the emulsion conduit 18a having the greater diameter) while maintaining the functional relationship among the supply section 18c, the effluent section 18d and the mixing section 18e.

The mixer 18 as described herein may be replaced by other equivalent and amenable mixing devices. An example of a type of mixer that is amenable for use herein is a known jet mixer in which the slurry is pressurized and then expelled by injection. For embodiments using a jet mixer, it is not necessary to define precisely the boundaries of a mixing section and a coagulum section within the mixer since numerous known variations of the mixer design may be employed.

As shown in FIG. 3, the mixer 18 receives the emulsion and the slurry and effects a continuous process of preparing and discharging a composite as a fine dispersion of elastomeric charge (or "dispersion") therefrom. During a coagulation preparation cycle, the emulsion and the slurry are simultaneously fed to the mixer 18. The feed rate for each of the emulsion and the slurry can be precisely metered so as to preserve a continuous flow process and obviate the presence of free latex and undispersed filler upon discharge from system 10. As used herein, a "continuous" process identifies a process or any portion of a process in which all of the steps can be executed without interruption. Continuous processes eliminate the need for intermediary steps and thereby sustain diverse industrial applications (for example, the production of various rubber mixtures destined for the production of tires).

Referring to FIG. 2, the mixer 18 discharges the composite to a homogenizing section 20 wherein the charge particles (e.g., charges of silica) are more finely dispersed. A homogenizer may be selected from a variety of commercially available devices, an example of which is shown as a helical homogenizing agitator 20a of predetermined length rotatably disposed within a generally annular homogenizing chamber 20b. It is understood that the homogenizing chamber 20b may assume any cross-sectional geometry that is amenable to practice of the invention.

The homogenizing chamber 20b has an ingress extent 20b' in fluid communication with the mixer 18 (more particularly, at discharge extent 18b' of the slurry conduit 18b thereof) and an opposed egress extent 20b" in fluid communication with an adjacent kneading section 22 of the coagulum preparation installation 12. During homogenization, the homogenizing agitator 20a rotates so as to generate sufficient friction between the composite conveyed thereby and an inner wall surface of the homogenizing chamber 20b. The geometry of the helical agitator 20a relative to that of homogenizing chamber 20b controllably propels the composite toward the kneading section 22. The agitator's rotational speed, governed by a programmable motor M₂₀, establishes the conveyance rate of the composite and the resultant shearing efficiency. The fluid communication that is established between the mixer 18 and the kneading section 22 via the homogenizing chamber 20 sustains uninterrupted conveyance of the composite, generally at or near atmospheric pressure and typically by the effect of gravity.

The mixer 18 discharges the composite into the kneading section 22 of the coagulum preparation installation 12. In the kneading section 22, an exemplary kneading element includes a generally helical kneading agitator 22a of predetermined length rotatably disposed within a generally annular kneading chamber 22b. The kneading chamber 22b has an ingress extent 22b' in fluid communication with an adjacent egress extent 20b" of the homogenizing chamber 20 and an opposed egress extent 22b" in fluid communication with an adjacent texturing section 24 of the coagulum preparation installation 12. It is understood that the kneading chamber 22b may assume any cross-sectional geometry that is amenable to practice of the invention.

In order to facilitate kneading (that is, the mechanical action that propagates coagulation) while simultaneously effecting a controlled progression of the composite toward the texturing section 24, the kneading agitator 22a rotates so as to generate sufficient friction between the composite conveyed thereby and an inner wall surface of the kneading chamber 22b. The geometry of the kneading agitator 22a relative to that of the kneading chamber 22b controllably propels the composite toward the texturing section 24. The kneading agitator's rotational speed, governed by a programmable motor M₂₂, establishes the conveyance rate of the composite and the resultant shearing efficiency.

Still referring to FIG. 2, the kneading agitator 22a, without interruption, meters the composite from the kneading section 22 toward the texturing section 24 of the coagulum preparation installation 12. The texturing section 24 delimits the coagulum size of the composite prior to a dewatering process (described further herein with respect to FIG. 1). In the texturing section 24, an exemplary texturing element includes a generally helical texturing agitator 24a of pre-determined length rotatably disposed within a texturing chamber 24b. The texturing chamber 24b has an ingress extent 24b' in fluid communication with the adjacent egress extent 22b"of the kneading chamber 22b and an opposed egress extent 24b" from which the coagulum preparation installation 12 discharges the composite as a coagulum. It understood that the texturing chamber 24 may assume any cross-sectional geometry that is amenable to practice of the invention.

In order to facilitate texturing (that is, the mechanical action that delimits the coagulum size of the composite before a subsequent dewatering process), while at the same effecting a controlled progression of the composite toward discharge from coagulum preparation installation 12, texturing agitator 24a rotates so as to generate sufficient friction between the composite conveyed thereby and an inner wall surface of the texturing chamber 24b. The geometry of the texturing element 24a relative to that of the texturing chamber 24b controllably propels the composite toward the egress extent 24b" of the texturing chamber 24 and eventual discharge from the coagulum preparation installation 12 (see arrow C of FIG. 2). The texturing agitator's rotational speed, governed by a motor M₂₄, establishes the conveyance rate of the composite and the resultant shearing efficiency. The coagulum preparation installation 12 realizes the discharge of coagulum as a generally continuous output simultaneously with the ongoing alimentation of the emulsion and slurry into the mixer 18.

Referring again to FIG. 1, the coagulum preparation installation 12 conveys the composite (i.e., the coagulum) to a dewatering installation 28. The dewatering installation 28 includes a suitable wringing and/or drying apparatus in operable communication with a granulation apparatus disposed in series therewith. An example of a suitable wringing and/or drying apparatus is shown herein as a dewatering device 30 that wrings the coagulum and thereby reduces the water content thereof prior to granulation. The resultant effluent is discharged by the dewatering device for appropriate treatment (see arrow D of FIG. 1). The optimal water content may vary as a function of the selected recipe and the specific equipment employed to effect coagulation, dewatering and drying of the composite. The dewatering device 30 may be selected from a variety of commercially available devices, and it is understood that other suitable devices may be substituted therefor, including but not limited to extruder dryers, fluid bed dryers, hot air and other oven dryers and equivalents thereof.

The dewatering device 30 discharges the dewatered coagulum toward the granulation apparatus, an example of which is shown as a pelletizer 32 that converts the dewatered coagulum into humid pellets (also known as "pelletized material", "crumb" or "pellets"). The pelletizer 32 may be selected from a variety of commercially available pelletizing devices. Upon discharge from the pelletizer 32, the composite is suitable for dosing with one or more additives and vulcanizing agents.

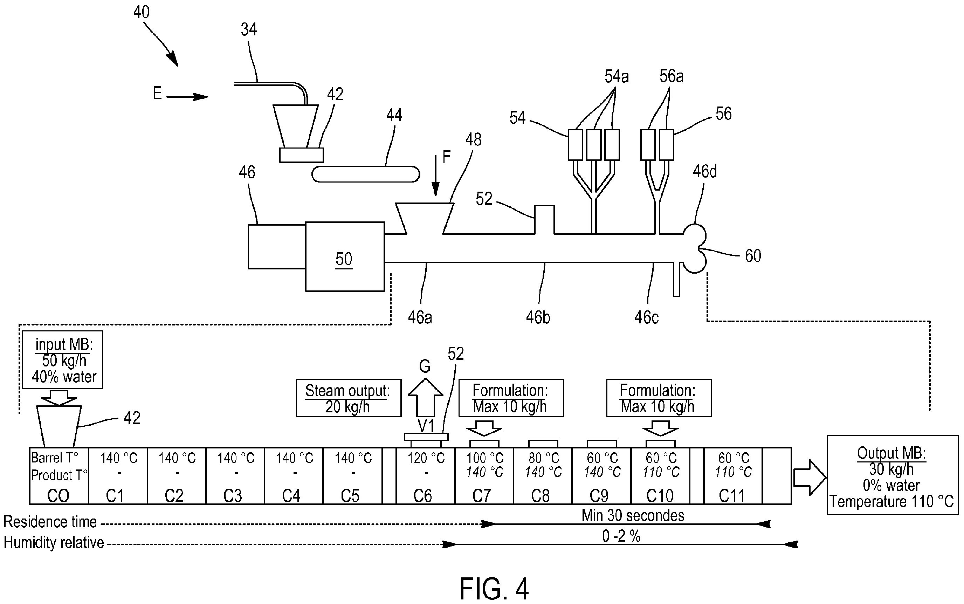

Still referring to FIG. 1 and additionally referring to FIG. 4, the dewatering installation 28 conveys the humid pellets via a conduit 34 from the pelletizer 32 to a mixing installation 40 in communication therewith (see arrow E of FIG. 4). In some embodiments, this conveyance is effected by a programmable pneumatic apparatus (not shown) that meters the pellets at a predetermined rate. Transfer may also be affected by one or more conveyors including one or more transfer belts as is known in the art.

The mixing installation 40 includes a wet pellet dosing system having a discharge hopper 42 and a motorized conveyor 44. A non-regulated screw conveyor enables discharge of the pellets into the discharge hopper 42 at a fixed speed according to the flow setpoint. A monitoring system (not shown) having at least one sensor may detect one or more of a filling rate at which the pellets are conveyed to the hopper, a current fill height of the pellets in the hopper and a current weight of the pelletized material in the hopper (e.g., as determined from detection of the fill rate and the current fill height). The monitoring system can generate one or more signals indicative of a predetermined fill height and/or weight. The monitoring may be continuous or intermittent such that the command signals can effect a real-time adjustment

At the mixing installation 40, the hopper 42 discharges all or part of the discharged pelletized material as a predetermined dosage (i.e., dosed pellets) to the motorized conveyor 44. The motorized conveyor 44 includes at least one mass sensor or equivalent means for weighing the dosed pellets prior to delivery thereof to a complementary mixer 46. The motorized conveyor 44 realizes a transport sequence during which a speed of the motorized conveyor is adjusted as a function of a weight of the discharged pelletized material. The conveyor speed may therefore be accelerated or retarded, or the conveyor may be halted, as a function of the weight of the dosed pellets. For example, upon weighing the dosed pellets, the conveyor speed may be adjusted as a function of the equivalence between the required weight of the material to be delivered to the complementary mixer 46 (e.g., as a function of the selected recipe) and either of (a) the detected weight of the material or (b) a sum of the detected weight of successive discharges of pelletized material. In detecting the weight of the dosed pellets, the motorized conveyor 44 verifies comportment with the recipe's requirements. Delivery to the complementary mixer 46 is effected generally at or near atmospheric pressure and typically by the effect of gravity.

If the motorized conveyor 44 detects a weight that comports with the recipe requirements, it can transport the dosed pellets to the mixer 46. If the detected weight is below the weight required by the recipe, the motorized conveyor 44 can transport the dosed pellets to the mixer 46 and await a subsequent discharge of pelletized material that is sufficient to make up the detected difference. If the detected weight exceeds the weight required by the recipe, the motorized conveyor 44 can advance the dosed pellets so as to only deliver a portion thereof sufficient to meet the recipe requirements (for example, by retarding the conveyor speed and halting the conveyor after delivery of the required dosage). The surplus can be used for a subsequent delivery of dosed pellets to mixer 46.

The monitoring system for system 10 can be set up to ensure the reproducibility of the location and position of each dosage of discharged pelletized material. The accuracy of the weighing is thus respected.

Still referring to FIGS. 1 and 4, the motorized conveyor 44, after performing the weighing process, delivers the discharged pelletized material to the mixer 46 (see arrow F of FIGS. 1 and 4). The mixer 46 includes multiple zones 46a, 46b, 46c wherein the temperature of the composite is specified for each zone. During a production cycle, the time at which the composite enters and exits each zone ("residence time") is also specified. In doing so, the system 10 realizes the chemical reactions needed to obtain an elastomeric mixture having targeted rheological properties. These properties are variable and adaptable as a function of the ultimate implementation of the elastomeric mixture. For example, for mixtures that are destined for the manufacture of tires, the resultant tire should exhibit targeted performance properties (e.g., reduced rolling resistance, improved wear resistance, a comparable grip in wet and dry conditions, etc.).

Among the zones specified in the mixer 46, a feeding zone 46a is provided in which the mixer receives the pelletized material (i.e., dosed pellets) from the motorized conveyer 44. An ingress such as a feeding hopper 48 may be provided that feeds the pelletized material to an extruder 50 for conversion into the elastomeric mixture. As shown and described herein, the extruder 50 is a twin-screw extruder that enables a controlled flow of all transported elements and reproducibility of the residence time. The rotating screws are disposed within a barrel within which the pelletized material is controllably advanced toward a mixer egress 46d. Twin-screw extrusion is appreciated for its consistency and increased productivity due to continuous processing. By pairing a twin-screw extruder with the weight-metering capability of the motorized conveyor 44, a targeted feed rate can be fixed and maintained throughout a production cycle. The twin-screw extruder can exhibit a variety of known screw and barrel configurations for processing a wide range of raw materials as a function of the selected recipe.

Within the feeding zone 46a, the intermeshing rotation of the extruder 50 controllably propels the composite as an extrudate having a targeted temperature upon egress from the feeding zone. This targeted temperature is typically in a range from about 120°C to about 180°C, and preferably from about 140°C to about 150°C.

The extrudate enters a drying zone 46b of the mixer 46 along which residual water is further eliminated from the extrudate. Along the drying zone 46b, the barrel maintains a constant temperature as the composite is conveyed therealong. The drying zone 46b terminates at a vapor extractor 52 that evacuates the water extracted from the extrudate at a predetermined rate (see arrow G of FIG. 4). The vapor extractor 52 may be selected from a variety of commercially available devices, including but not limited to those having a vacuum or other means for removing the water vapor and any inherent particulate matter.

The mixing zone 46c is defined along a portion of the mixer between the vapor extruder 52 and the extruder egress 46d. Along the mixing zone 46c, the mixer 46 receives one or several supplementary elastomers and necessary additives as well as complementary ingredients that form the system of reticulation.

Within the mixing zone 46c, the extruder 50 advances the elastomeric material toward an additive doser 54 that introduces one or more additives 54a into the mixing zone 46c. The additive doser 54 is disposed at an additive dosage position of the mixing zone 46c at which the extrudate reaches a pre-defined target temperature for introducing the additives 54a. The pre-defined temperature is defined as a function of the selected recipe. The additive doser 54 may include at least one of a volumetric doser and a gravimetric doser such that the additives 54a may be introduced in both liquid and powder forms according to the needs of the selected recipe. The additives introduced into the elastomeric mixture may include, but are not limited to, one or more oils, one or more complementary elastomers, recycled materials, one or more protection agents and one or more antioxidants.

Subsequent to the introduction of the additives 54a, the extruder 50 advances the elastomeric material downstream from the additive doser 54 toward a vulcanizing agent doser 56 that introduces one or more vulcanizing agents 56a into the mixing zone 46c. The vulcanizing doser 56 is disposed at a vulcanizing dosage position of the mixing zone 46c at which the extrudate reaches a pre-defined target temperature for introducing the vulcanizing agents 56a. The pre-defined temperature is defined as a function of the selected recipe. The vulcanizing doser 56 may include at least one of a volumetric doser and a gravimetric doser such that the vulcanizing agents 56a may be introduced in both liquid and powder forms according to the needs of the selected recipe. These liquid and powder forms may be incorporated in one or more elastomer blocks. The nature of the additive (i.e., whether it is in liquid or powder form) may determine the dosing device to be used (weighing system for powder, volumetric pump for liquid and gear or volumetric pump for elastomer pellets). In certain embodiments, the vulcanizing agents include at least one of sulfur and one or several accelerators. It is understood that other vulcanizing and crosslinking agents and their complements can be introduced into the mixer 46 as understood by a person of ordinary skill in the art.

During the continuous liquid mixing process, the extruder 50 controls the downstream conveyance of the extrudate such that the extrudate realizes a minimum residence time at each of the additive dosage position and the vulcanizing dosage position in the mixing zone 46c.

Referring to FIGS. 1 and 4, the mixer 46 discharges the resultant extrudate from the egress extent 46d toward an apparatus or installation that forms the finished or semi-finished composite. An exemplary apparatus is shown herein as a pair of rollers 60 that form the composite into a rubber sheet or band of rubber material R as is known in the art. The rollers 60 can have an adjustable distance therebetween that enables variance in the product thickness.

As shown in FIG. 1, the system 10 conveys the band R downstream of the mixer 46 to a cooling installation 62 where the composite is cooled sufficiently for stockage and/or further processing. As shown herein, cooling may be effected by a batch-off cooling line or equivalent means that is known for reducing rubber temperatures to ambient.

Referring further to FIG. 1, the system 10 conveys the cooled band R to an optional stacking installation 64 that is capable of receiving and stacking the composite (for example, by means of a stacking apparatus provided thereat). The monitoring system of the system 10 can include a system of detection that monitors the stacking of the rubber material R with respect to one or more palettes P. The palettes P, when full, are transported for storage and/or further processing of the rubber material as a function of the material's destined use.

Reference is now made to FIG. 4 for describing an example of a continuous liquid mixing process that is performed by the system 10. All figures and numbers are provided by way of example only and do not limit the invention to particular values. A person of ordinary skill in the art would understand that diverse modifications and variants can be applied without departing from the scope of the disclosed invention.

### EXAMPLE

• A recipe is selected for realizing a mixture of natural rubber and silica charged at 50 PHR.
• The emulsion reservoir 14 delivers a concentrated latex to the coagulum mixer 18, which also receives a concentrated slurry from the slurry reservoir 16.
• The discharge hopper 42 feeds the coagulum to the feeding zone 46a of the mixer 46 at a rate of 50kg/h (position C0).
• The extruder 50 realizes a speed of 350 rpm (positions C0 to C11).
• The vapor extractor 52 realizes a steam discharge rate of 20 kg/h (position C6).
• For the selected recipe, the dosages of each additive and vulcanizing agent are regulated as follows:
o Maximum debit introduced by additive doser 54:
   10kg/h (position C7)
o Maximum debit introduced by vulcanizing agent doser 56:
   10 kg/h (position C10)

• In order to realize the necessary chemical reactions that produce a mixture having the predicted rheological properties, the following extrudate temperatures are realized in each of the feeding zone 46a, the drying zone 46b and the mixing zone 46c:

**TABLE 1**

| Position | C0-C2 | C3-C5 | C6 | C7 | C8-C9 | C10-11 |
|---|---|---|---|---|---|---|
| Function | Feeding | drying | Steam discharge (drying) | Formulation | Cooling | Formulation |
| Temperature (°C) | 140 | 140 | 120 | 140 | 140 | 110 |
| Zone type | pump | kneading | pump | mixing | pump | mixing |

• The mixer 46 conveys the extrudate such that the extrudate realizes a minimum residence time of 30 seconds at each position in the mixing zone (positions C7 to C11).
• From the vapor extractor 52 through the mixing zone 46b, the mixer 46 eliminates the water content from the extrudate such that the extrudate exhibits a relative humidity of about 0-2% (positions C6 to C11).
• At discharge extent 46d, the mixer 46 discharges the rubber material R at a discharge rate of 30kg/h. The rubber material exhibits a product temperature of about 110°C and a water content at or about 0%.

The system 10 realizes the execution of full liquid mixing with the direct production of a finished or semi-finished composite therefrom. A high quality mixture is economically obtained from the use of a stable synthetic slurry without requiring dispersion prior to coagulation. Recovery by an additional mixer such as a Banbury mixer is eliminated, thereby obviating associated process and transport costs.

The system 10 permits the realization of mixtures derived from a variety of rubber mixture recipes without the need for distinct equipment. By realizing a continuous gravimetric dosing at the inlet of the mixer 46, the selected recipe is respected due to the non-agglomerating properties of the humid coagulum pellets. Dosing is possible because a constant water content is obtained in the pellets (that is, upon leaving pelletizer 32). This is a beneficial result of the control of the continuous coagulation: the pellets do not agglomerate due to the presence of water therebetween. The disclosed invention presents therefore the ability to use dispersible nanometric fillers only in liquid form. The use of a co-rotating twin screw sustains control of the residence time and therefore respects the level of energy, temperature and dosage of additives and vulcanizing agents.

As used herein, the term "method" or "process" may include one or more steps performed at least by one electronic or computer-based apparatus having a processor for executing instructions that carry out the steps.

The terms "at least one" and "one or more" are used interchangeably. Ranges that are described as being "between a and b" are inclusive of the values for "a" and "b."

## Claims

1. A continuous liquid mixing process for producing a composite as a function of a selected rubber mixture recipe, in which the process comprises the following steps:
forming a coagulum within pre-defined coagulum production sections of a coagulation preparation installation (12);
dewatering the coagulum and converting the dewatered coagulum into a pelletized material;
conveying the pelletized material to a mixing installation (40);
metering the pelletized material into a complementary mixer (46);
controllably advancing the pelletized material within pre-defined zones in the complementary mixer (46) such that, for each zone, a residence time of the pelletized material is controlled and a target temperature of the pelletized material is realized prior to downstream conveyance thereof; and
discharging the composite from the complementary mixer (46) as a semi-finished rubber material (R),
wherein the coagulum production sections of the coagulation preparation installation (12) comprise:
a coagulum mixer (18) in fluid communication with each of an emulsion reservoir (14) that stores an elastomer emulsion and a slurry reservoir (16) that stores a slurry in which particles of charge are dispersed in water;
a homogenizing section (20) in fluid communication with the coagulum mixer (18) and downstream thereof, the homogenizing section (20) including a helical homogenizing agitator (20a) of predetermined length rotatably disposed within a generally annular homogenizing chamber (20b);
a kneading section (22) in fluid communication with the homogenizer (20) and downstream thereof, the kneading section (22) including a generally helical kneading agitator (22a) of predetermined length rotatably disposed within a generally annular kneading chamber (22b); and
a texturing section (24) in fluid communication with the kneading section (22) and downstream thereof, the texturing section including a generally helical texturing agitator (24a) of pre-determined length rotatably disposed within a texturing chamber (24b) and having an egress extent (24b") from which the coagulum preparation installation (12) discharges the coagulum.

2. The continuous liquid mixing process of claim 1, wherein the pre-defined zones in the mixer (46) comprise:
a feeding zone (46a) into which the pelletized material is fed to an extruder (50) that converts the pelletized material into an extrudate;
a drying zone (46b) positioned downstream of the feeding zone (46a) and terminating in a vapor extractor (52) that evacuates residual water that is extracted from the extrudate in the drying zone; and
a mixing zone (46c) positioned downstream of the drying zone (46b) and defined along a portion of the mixer (46) between the vapor extruder (52) and an extruder egress (46d) from which the mixer (46) discharges the semi-finished rubber material (R).

3. The continuous liquid mixing process of claim 2, wherein the extruder (50) is a twin-screw extruder.

4. The continuous liquid mixing process of claim 2 or claim 3, further comprising the steps of:
introducing one or more additives (54a) into the mixing zone (46c) at an additive dosage position thereof where the extrudate reaches a pre-defined target temperature for introducing the additives; and
subsequently adding one or more vulcanizing agents (56a) into the mixing zone (46d) at a vulcanizing dosage position thereof where the extrudate reaches a pre-defined target temperature for introducing the vulcanizing agents.

5. The continuous liquid mixing process of claim 4, wherein an additive doser (52) disposed at the additive dosage position realizes introduction of the one or more additives (52a) into the mixing zone (46c) and a vulcanizing agent doser (54) disposed at the vulcanizing dosage position realizes introduction of the one or more vulcanizing agents (54a) into the mixing zone (46c).

6. The continuous liquid mixing process of claim 4 or claim 5, wherein the extruder (50) controls downstream conveyance of the extrudate such that the extrudate realizes a minimum residence time at each of the additive dosage position and the vulcanizing dosage position in the mixing zone (46c).

7. The continuous liquid mixing process of any preceding claim, wherein the coagulum mixer (18) is selected from one of:
a coagulum mixer that includes a mixing zone (18e) in which a flow of the elastomer emulsion and a flow of the slurry are brought in contact, with one of the flows leading into the other flow and both flows being brought to low pressure before their contact with one another; and
a jet mixer in which the slurry is pressurized and then expelled by injection.

8. The continuous liquid mixing process of any preceding claim, further comprising the step of dewatering the coagulum and converting the dewatered coagulum into a pelletized material at a dewatering installation (28).

9. The continuous liquid mixing process of claim 8, wherein the dewatering installation (28) includes a dewatering device (30) that discharges a dewatered coagulum therefrom and a granulation apparatus (32) that converts the dewatered coagulum into the pelletized material.

10. The continuous liquid mixing process of any preceding claim, wherein the mixing installation (40) includes a motorized conveyor (44) having at least one mass sensor for performing a weighing process during which the motorized conveyor delivers discharged pelletized material in real time into the complementary mixer (46).

11. The process of claim 10, wherein the motorized conveyor (44) realizes a transport sequence during which a speed of the motorized conveyor is adjusted as a function of a weight of the discharged pelletized material.

12. The continuous liquid mixing process of any preceding claim, wherein the step of discharging the composite from the complementary mixer (46) includes providing a pair of rollers (60) adjacent the extruder egress (46d) that form the extrudate into a band of rubber material (R).

13. The continuous liquid mixing process of any preceding claim, further comprising the step of conveying the composite to a cooling installation (62).

14. The continuous liquid mixing process of any preceding claim, further comprising the step of conveying the composite band to a stacking installation (64) that realizes stacking of the composite in at least one palette P.

## Patentansprüche

1. Kontinuierliches Flüssigmischverfahren zur Produktion eines Verbundstoffs als Funktion eines ausgewählten Kautschukmischungsrezepts, wobei das Verfahren die folgenden Schritte umfasst:
Bilden eines Koagulums innerhalb vordefinierter Koagulumproduktionsabschnitte einer Koagulumherstellungseinrichtung (12);
Entwässern des Koagulums und Konvertieren des entwässerten Koagulums zu einem pelletierten Material;
Fördern des pelletierten Materials zu einer Mischeinrichtung (40);
Dosieren des pelletierten Materials in einen komplementären Mischer (46);
steuerbares Vorrücken des pelletierten Materials innerhalb vordefinierter Zonen in dem komplementären Mischer (46) derart, dass für jede Zone eine Verweilzeit des pelletierten Materials gesteuert wird und eine Zieltemperatur des pelletierten Materials vor dem nachgeordneten Fördern desselben realisiert wird; und
Austragen des Verbundstoffs aus dem komplementären Mischer (46) als halbfertiges Kautschukmaterial (R),
wobei die Koagulumproduktionsabschnitte der Koagulumherstellungseinrichtung (12) umfassen:
einen Koagulummischer (18) in Fließkommunikation mit jedem von einem Emulsionsreservoir (14), worin eine Elastomeremulsion verwahrt wird, und einem Aufschlämmungsreservoir (16), worin eine Aufschlämmung verwahrt wird, in der Ladungspartikel in Wasser dispergiert sind;
einen Homogenisierungsabschnitt (20) in Fließkommunikation mit dem Koagulummischer (18) und nachgeordnet dazu, wobei der Homogenisierungsabschnitt (20) einen spiralförmigen Homogenisierungsrührer (20a) mit vorbestimmter Länge einschließt, der innerhalb einer allgemein kranzförmigen Homogenisierungskammer (20b) drehbar angeordnet ist;
einen Knetabschnitt (22) in Fließkommunikation mit dem Homogenisierer (20) und nachgeordnet dazu, wobei der Knetabschnitt (22) einen allgemein spiralförmigen Knetrührer (22a) mit vorbestimmter Länge einschließt, der innerhalb einer allgemein kranzförmigen Knetkammer (22b) drehbar angeordnet ist; und
einen Texturierabschnitt (24) in Fließkommunikation mit dem Knetabschnitt (22) und nachgeordnet dazu, wobei der Texturierabschnitt einen allgemein spiralförmigen Texturierrührer (24a) mit vorbestimmter Länge einschließt, der innerhalb einer Texturierkammer (24b) drehbar angeordnet ist und eine Austrittausdehnung (24b") hat, aus der die Koagulumherstellungseinrichtung (12) das Koagulum austrägt.

2. Kontinuierliches Flüssigmischverfahren nach Anspruch 1, wobei die vordefinierten Zonen in dem Mischer (46) umfassen:
eine Speisezone (46a), in die das pelletierte Material zu einem Extruder (50) eingespeist wird, der das pelletierte Material in ein Extrudat konvertiert;
eine Trocknungszone (46b), die nachgeordnet zu der Speisezone (46a) positioniert ist und in einem Dampfextraktor (52) endet, der Restwasser evakuiert, das aus dem Extrudat in der Trocknungszone extrahiert wird; und
eine Mischzone (46c), die nachgeordnet zu der Trocknungszone (46b) positioniert und entlang eines Anteils des Mischers (46) zwischen dem Dampfextruder (52) und einem Extruderaustritt (46d) definiert ist, aus dem der Mischer (46) das halbfertige Kautschukmaterial (R) austrägt.

3. Kontinuierliches Flüssigmischverfahren nach Anspruch 2, wobei der Extruder (50) ein Doppelschneckenextruder ist.

4. Kontinuierliches Flüssigmischverfahren nach Anspruch 2 oder 3, des Weiteren umfassend die Schritte:
Einbringen von einem oder mehreren Additiven (54a) in die Mischzone (46c) an einer Additivdosierposition derselben, wo das Extrudat eine vordefinierte Zieltemperatur zum Einbringen der Additive erreicht; und
nachfolgendes Zugeben von einem oder mehreren Vulkanisiermitteln (56a) in die Mischzone (46d) an einer Vulkanisiermitteldosierposition derselben, wo das Extrudat eine vordefinierte Zieltemperatur zum Einbringen der Vulkanisiermittel erreicht.

5. Kontinuierliches Flüssigmischverfahren nach Anspruch 4, wobei ein Additivdosierer (52), der an der Additivdosierposition angeordnet ist, die Einbringung des einen oder der mehreren Additive (52a) in die Mischzone (46c) realisiert und ein Vulkanisiermitteldosierer (54), der an der Vulkanisiermitteldosierposition angeordnet ist, die Einbringung des einen oder der mehreren Vulkanisiermittel (54a) in die Mischzone (46c) realisiert.

6. Kontinuierliches Flüssigmischverfahren nach Anspruch 4 oder Anspruch 5, wobei der Extruder (50) das nachgeordnete Fördern des Extrudats steuert, so dass das Extrudat an jeder von der Additivdosierposition und der Vulkanisiermitteldosierposition in der Mischzone (46c) eine Mindestverweilzeit realisiert.

7. Kontinuierliches Flüssigmischverfahren nach einem der vorhergehenden Ansprüche, wobei der Koagulummischer (18) ausgewählt ist aus:
einem Koagulummischer, der eine Mischzone (18e) einschließt, in der ein Fluss der Elastomeremulsion und ein Fluss der Aufschlämmung in Kontakt gebracht werden, wobei einer der Flüsse in den anderen Fluss führt und beide Flüsse auf niedrigen Druck gebracht werden, bevor sie miteinander in Kontakt kommen; und
einem Strahlmischer, in dem die Aufschlämmung druckbeaufschlagt wird und dann mittels Injektion ausgestoßen wird.

8. Kontinuierliches Flüssigmischverfahren nach einem der vorhergehenden Ansprüche, des Weiteren umfassend den Schritt des Entwässerns des Koagulums und Konvertierens des entwässerten Koagulums in ein pelletiertes Material an einer Entwässerungseinrichtung (28) .

9. Kontinuierliches Flüssigmischverfahren nach Anspruch 8, wobei die Entwässerungseinrichtung (28) eine Entwässerungsvorrichtung (30), die ein entwässertes Koagulum daraus austrägt, und ein Granulierungsgerät (32), einschließt, welches das entwässerte Koagulum in das pelletierte Material konvertiert.

10. Kontinuierliches Flüssigmischverfahren nach einem der vorhergehenden Ansprüche, wobei die Mischeinrichtung (40) eine motorgetriebene Förderanlage (44) mit mindestens einem Massensensor zum Durchführen eines Wiegevorgangs einschließt, währenddessen die motorgetriebene Förderanlage ausgetragenes pelletiertes Material in Echtzeit in den komplementären Mischer (46) abgibt.

11. Verfahren nach Anspruch 10, wobei die motorgetriebene Förderanlage (44) eine Transportsequenz realisiert, während der eine Geschwindigkeit der motorgetriebenen Förderanlage als Funktion eines Gewichts des ausgetragenen pelletierten Materials angepasst wird.

12. Kontinuierliches Flüssigmischverfahren nach einem der vorhergehenden Ansprüche, wobei der Schritt des Austragens des Verbundstoffs aus dem komplementären Mischer (46) Bereitstellen eines Paares von Walzen (60) neben dem Extruderaustritt (46d) einschließt, wodurch das Extrudat zu einem Band aus Kautschukmaterial (R) geformt wird.

13. Kontinuierliches Flüssigmischverfahren nach einem der vorhergehenden Ansprüche, des Weiteren umfassend den Schritt des Förderns des Verbundstoffs zu einer Kühleinrichtung (62).

14. Kontinuierliches Flüssigmischverfahren nach einem der vorhergehenden Ansprüche, des Weiteren umfassend den Schritt des Förderns des Verbundstoffbands zu einer Stapeleinrichtung (64), die Stapeln des Verbundstoffs in mindestens einer Palette P realisiert.

## Revendications

1. Procédé de mélange continu en phase liquide pour la production d'un composite en fonction d'une recette de mélange de caoutchouc sélectionnée, le procédé comprenant les étapes suivantes :
former un coagulum à l'intérieur de sections de production de coagulum prédéfinies d'une installation de préparation de coagulation (12) ;
déshydrater le coagulum et convertir le coagulum déshydraté en un matériau granulé ;
transporter le matériau granulé jusqu'à une installation de mélange (40) ;
doser le matériau granulé dans un dispositif de mélange complémentaire (46) ;
amener le matériau granulé à avancer de manière régulable à l'intérieur de zones prédéfinies dans le dispositif de mélange complémentaire (46) de telle sorte que, pour chaque zone, un temps de séjour du matériau granulé soit régulé et une température cible du matériau granulé soit obtenue avant son transport en aval; et
évacuer le composite du dispositif de mélange complémentaire (46) sous la forme d'un matériau de caoutchouc semi-fini (R),
dans lequel les sections de production de coagulum de l'installation de préparation de coagulation (12) comprennent:
un dispositif de mélange de coagulum (18) en communication fluidique avec chacun d'un réservoir d'émulsion (14) qui stocke une émulsion d'élastomère et d'un réservoir de pâte fluide (16) qui stocke une pâte fluide dans laquelle des particules de charge sont dispersées dans de l'eau ;
une section d'homogénéisation (20) en communication fluidique avec le dispositif de mélange de coagulum (18) et en aval de celui-ci, la section d'homogénéisation (20) comprenant un dispositif d'agitation d'homogénéisation (20a) hélicoïdal d'une longueur prédéterminée, disposé à rotation à l'intérieur d'une chambre d'homogénéisation (20b) globalement annulaire ;
une section de malaxage (22) en communication fluidique avec le dispositif d'homogénéisation (20) et en aval de celui-ci, la section de malaxage (22) comprenant un dispositif d'agitation de malaxage (22a) globalement hélicoïdal d'une longueur prédéterminée, disposé à rotation à l'intérieur d'une chambre de malaxage (22b) globalement annulaire ; et
une section de texturation (24) en communication fluidique avec la section de malaxage (22) et en aval de celle-ci, la section de texturation comprenant un dispositif d'agitation de texturation (24a) globalement hélicoïdal d'une longueur prédéterminée, disposé à rotation à l'intérieur d'une chambre de texturation (24b) et comportant un segment de sortie (24b") depuis lequel l'installation de préparation de coagulum (12) évacue le coagulum.

2. Procédé de mélange continu en phase liquide selon la revendication 1, dans lequel les zones prédéfinies dans le dispositif de mélange (46) comprennent :
une zone d'alimentation (46a) dans laquelle le matériau granulé est amené à un dispositif d'extrusion (50) qui convertit le matériau granulé en extrudat ;
une zone de séchage (46b) positionnée en aval de la zone d'alimentation (46a) et se terminant par un dispositif d'extraction de vapeur (52) qui évacue l'eau résiduelle extraite de l'extrudat dans la zone de séchage ; et
une zone de mélange (46c) positionnée en aval de la zone de séchage (46b) et définie le long d'une partie du dispositif de mélange (46) située entre le dispositif d'extrusion à vapeur (52) et une sortie (46d) du dispositif d'extrusion depuis laquelle le dispositif de mélange (46) évacue le matériau de caoutchouc semi-fini (R).

3. Procédé de mélange continu en phase liquide selon la revendication 2, dans lequel le dispositif d'extrusion (50) est une extrudeuse à double vis.

4. Procédé de mélange continu en phase liquide selon la revendication 2 ou la revendication 3, comprenant en outre les étapes consistant à :
introduire un ou plusieurs additifs (54a) dans la zone de mélange (46c) au niveau d'une position de dosage d'additifs de celle-ci où l'extrudat atteint une température cible prédéfinie pour l'introduction des additifs ; et
ajouter ensuite un ou plusieurs agents de vulcanisation (56a) dans la zone de mélange (46d) au niveau d'une position de dosage de vulcanisation de celle-ci où l'extrudat atteint une température cible prédéfinie pour l'introduction des agents de vulcanisation.

5. Procédé de mélange continu en phase liquide selon la revendication 4, dans lequel un dispositif de dosage d'additifs (52) disposé au niveau de la position de dosage d'additifs effectue l'introduction du ou des additifs (52a) dans la zone de mélange (46c), et un dispositif de dosage d'agent de vulcanisation (54) disposé au niveau de la position de dosage de vulcanisation effectue l'introduction du ou des agents de vulcanisation (54a) dans la zone de mélange (46c).

6. Procédé de mélange continu en phase liquide selon la revendication 4 ou la revendication 5, dans lequel le dispositif d'extrusion (50) régule le transport en aval de l'extrudat de telle sorte que l'extrudat ait un temps de séjour minimal à chacune de la position de dosage d'additifs et de la position de dosage de vulcanisation dans la zone de mélange (46c).

7. Procédé de mélange continu en phase liquide selon l'une quelconque des revendications précédentes, dans lequel le dispositif de mélange de coagulum (18) est sélectionné parmi :
un dispositif de mélange de coagulum qui comprend une zone de mélange (18e) dans laquelle un écoulement de l'émulsion d'élastomère et un écoulement de la pâte fluide sont mis en contact, l'un des écoulements s'incorporant dans l'autre écoulement et les deux écoulements étant amenés à une faible pression avant leur mise en contact ; et
un dispositif de mélange à jet dans lequel la pâte fluide est mise sous pression puis expulsée par injection.

8. Procédé de mélange continu en phase liquide selon l'une quelconque des revendications précédentes, comprenant en outre l'étape consistant à déshydrater le coagulum et à convertir le coagulum déshydraté en matériau granulé au niveau d'une installation de déshydratation (28).

9. Procédé de mélange continu en phase liquide selon la revendication 8, dans lequel l'installation de déshydratation (28) comprend un dispositif de déshydratation (30) qui évacue un coagulum déshydraté depuis celui-ci et un appareil de granulation (32) qui convertit le coagulum déshydraté en matériau granulé.

10. Procédé de mélange continu en phase liquide selon l'une quelconque des revendications précédentes, dans lequel l'installation de mélange (40) comprend un dispositif de transport motorisé (44) comportant au moins un capteur de masse servant à effectuer un procédé de pesage au cours duquel le dispositif de transport motorisé distribue du matériau granulé en temps réel dans le dispositif de mélange complémentaire (46).

11. Procédé selon la revendication 10, dans lequel le dispositif de transport motorisé (44) exécute une séquence de transport durant laquelle une vitesse du dispositif de transport motorisé est ajustée en fonction d'un poids du matériau granulé évacué.

12. Procédé de mélange continu en phase liquide selon l'une quelconque des revendications précédentes, dans lequel l'étape consistant à évacuer le composite du dispositif de mélange complémentaire (46) comprend le fait de prévoir une paire de rouleaux (60) en position adjacente à la sortie (46d) du dispositif d'extrusion, lesdits rouleaux façonnant l'extrudat en une bande de matériau de caoutchouc (R).

13. Procédé de mélange continu en phase liquide selon l'une quelconque des revendications précédentes comprenant en outre l'étape consistant à transporter le composite jusqu'à une installation de refroidissement (62).

14. Procédé de mélange continu en phase liquide selon l'une quelconque des revendications précédentes, comprenant en outre l'étape consistant à transporter la bande de composite jusqu'à une installation d'empilement (64) qui réalise l'empilement du composite sur au moins une palette P.
